# EUROPÄISCHE PATENTSCHRIFT

(11) **EP 2 016 734 B1**
(45) Veröffentlichungstag und Bekanntmachung des Hinweises auf die Patenterteilung: **19.04.2017**
(21) Anmeldenummer: 07728934.6
(22) Anmeldetag: 09.05.2007
(51) Int. Cl.: H04L 29/06

(54) **Versenden und Empfangen von Blockdaten in zeitlich coordinierter Manier**
Sending and Receiving Blocks of Data in a Timely Coordinated Manner
Envoi et réception des données en bloc à une manière coordonnée temporairement

(30) Priorität: 10.05.2006 DE 102006021846
(43) Veröffentlichungstag der Anmeldung: 21.01.2009
(73) Patentinhaber: QUALCOMM Incorporated, San Diego, CA 92121-1714 (US)
(72) Erfinder: ABDEL SAMAD, Wissam, 80937 München (DE); ARNOLD, Andreas, 81549 München (DE); JENKAC, Hrvoje, 81373 München (DE); STOCKHAMMER, Thomas, 83346 Bergen (DE); XU, Wen, 85579 Neubiberg (DE)
(74) Vertreter: Dunlop, Hugh Christopher
(86) Internationale Anmeldenummer: PCT/EP2007/054482
(87) Internationale Veröffentlichungsnummer: WO 2007/128830

(56) Entgegenhaltungen:
- EP-A- 1 494 430
- WO-A-2004/072766
- US-B1- 6 397 251

## Beschreibung

Die Erfindung betrifft eine Empfangseinrichtung zum blockbasierten Empfang von Dateien über einen ersten Kanal, eine Sendeeinrichtung zum blockbasierten Übertragen von Dateien über einen ersten Kanal sowie ein System zur Dateiübertragung. Die Erfindung betrifft ferner ein Verfahren zum blockbasierten Empfang einer Datei und ein Verfahren zum blockbasierten Senden einer Datei.

Bei der Übertragung von Daten kann unter anderem unterschieden werden zwischen einer Broadcast-Übertragung und einer Punkt-zu-Punkt-Übertragung. Bei einer Broadcast-Übertragung werden die Daten beziehungsweise eine Datei von einem Sender gleichzeitig an viele Empfänger gesendet, während bei einer Punkt-zu-Punkt-Übertragung die Datenübertragung jeweils von einem Sender zu einem Empfänger stattfindet. Weiterhin kann unterschieden werden zwischen einer Datenübertragung nach einem Streaming-Verfahren, bei dem ein kontinuierlicher Datenstrom übertragen wird, und einem Download-Verfahren, bei dem jeweils eine dateiweise Übertragung für eine einzelne, als abgeschlossene Einheit ansehbare Datei erfolgt.

EP-A-1 494 430 offenbart von einem Empfänger wiederzugebende Multimedia-Daten von einem Sender über einen ersten Kanal zu dem Empfänger zu übertragen. Über einen zweiten Kanal werden Metadaten zu dem Empfänger übertragen. Die Metadaten umfassen die Multimedia-Daten ergänzende Daten, wie z.B. Inhaltsangaben, Hinweise auf spezielle Teile der Multimedia-Daten und Lesezeichen. Die Multimedia-Daten und die Metadaten umfassen jeweils Zeitinformation, die eine zeitliche Zuordnung von Metadaten zu zugeordneten Multimedia-Daten ermöglichen. Wenn der Empfänger sowohl die Multimedia-Daten als auch die Metadaten empfangen und gespeichert hat, können die Multimedia-Daten zeitlich synchronisiert mit den Metadaten wiedergegeben werden.

Bei einem Döwnload-Verfahren können Dateien, insbesondere Multimediadateien, die beispielsweise im MP3-Format vorliegen, abgespielt werden, wenn zumindest ein zusammenhängender Teil vom Anfang der entsprechenden Datei an heruntergeladen ist und der Rest der Datei während des Abspielens weiter heruntergeladen wird. Dabei kann man von einem frühen Abspielen, englisch "early playout" sprechen. Wenn jedoch beispielsweise eine Rate, also eine Datenmenge pro Zeitabschnitt, mit der die Datei abgespielt wird, höher ist als die Rate, mit der die Datei weiterhin heruntergeladen wird, kann es vorkommen, dass nicht mehr genügend Daten für ein weiteres Abspielen am Empfänger zur Verfügung stehen und es zu einer Unterbrechung beziehungsweise einem Abbruch des Abspielvorgangs kommt.

Bei Punkt-zu-Punkt-Verbindungen können Sender und Empfänger in beiden Richtungen Informationen darüber austauschen, wann ein geeigneter Zeitpunkt erreicht ist, ab dem ein verzögerungsfreies beziehungsweise unterbrechungsfreies Abspielen der heruntergeladenen Datei möglich ist. In Broadcast-Systemen, wie Multimedia Broadcast Multicast Service MBMS oder Digital Video Broadcasting-Handheld, DVB-H ist keine Rückwärtskommunikation vom Empfänger zum Sender vorgesehen. Eine Übertragung von Dateien nach dem Download-Verfahren erfolgt beispielsweise über das File Delivery Over Unidirectional Transport Protokoll, das FLUTE-Protokoll. Ein Empfänger kann zwar erkennen, dass eine auch nur teilweise heruntergeladene Datei frühzeitig verarbeitbar oder abspielbar ist, hat aber wegen der fehlenden rückwärtigen Kommunikation mit dem Sender keine Möglichkeit, den Zeitpunkt für den Verarbeitungsbeginn mit dem Sender abzustimmen. Der Empfänger kann also beispielsweise warten, bis eine Datei vollständig heruntergeladen ist oder zu irgendeinem Zeitpunkt mit einem Abspielen beginnen, bei dem empfängerseitig akzeptiert wird, dass es zu den beschriebenen Unterbrechungen kommen kann.

Aufgabe der Erfindung ist es, eine Empfangseinrichtung, eine Sendeeinrichtung und ein System zur Dateiübertragung bereitzustellen, bei denen auf Empfängerseite während des Herunterladens einer Datei eine verzögerungsfreie Verarbeitung der Datei ermöglicht wird. Es ist ferner Aufgabe der Erfindung, Verfahren zum Empfangen und Senden einer Datei anzugeben, bei denen auf Empfängerseite während des Herunterladens einer Datei eine verzögerungsfreie Verarbeitung der Datei ermöglicht wird.

Diese Aufgaben werden mit den Gegenständen der unabhängigen Patentansprüche gelöst. Ausgestaltungsformen und Weiterbildungen der Erfindung sind Gegenstand der Unteransprüche.

In einer Ausführungsform ist eine Empfangseinrichtung zum blockbasierten Empfang von Dateien über einen ersten Kanal vorgesehen. Die Empfangseinrichtung umfasst Mittel zum Empfangen von Ausspielparametern über einen zweiten Kanal, die wenigstens einen Satz von Informationen über eine Ausspielrate und eine Verzögerungszeit für eine über den ersten Kanal zu empfangende Datei umfassen. Ferner umfasst die Empfangseinrichtung eine Auswerteeinrichtung zur Bestimmung eines Zeitpunkts für einen Beginn einer Verarbeitung der zur empfangenen Datei in Abhängigkeit der Ausspielparameter.

In der Empfangseinrichtung soll über den ersten Kanal eine Datei empfangen werden. Die Datei kann beispielsweise eine Multimediadatei sein, die gewisse Zeitinformationen umfassen kann. Über einen zweiten Kanal werden Ausspielparameter übertragen. Der erste und der zweite Kanal sind beispielsweise als logische Kanale ausgebildet. Die Ausspielparameter können einen Satz oder mehrere Sätze von Informationen aufweisen, die jeweils eine Ausspielrate und eine Verzögerungszeit für die zu empfangende Datei umfassen. Die Verzögerungszeit kann dabei eine Information über einen Zeitpunkt repräsentieren, ab dem eine Verarbeitung der Datei verzögerungsfrei beziehungsweise unterbrechungsfrei erfolgen kann, wenn die Datei mit der zugehörigen Ausspielrate ausgespielt wird. Der Zeitpunkt wird in der Auswerteeinrichtung bestimmt, beispielsweise aus dem Zeitpunkt des Empfangsbeginns und der Verzögerungszeit.

Durch die Bestimmung des Zeitpunkts in Abhängigkeit der zusätzlich zu der Datei übertragenen Ausspielparameter kann somit vor Beendigung des Herunterladens beziehungsweise des Empfangens der Datei über den ersten Kanal mit einer Verarbeitung also beispielsweise einem Abspielen der Datei begonnen werden.

Die Ausspielparameter können etwa als Garantie oder Empfehlung eines Senders verstanden werden, dass ein Empfänger, der die Datei mit einer bestimmten Ausspielrate ausspielt, ab einem Beginn des Empfangs, beispielsweise eines ersten.Bytes der Datei, nach der übermittelten Verzögerungszeit mit der Verarbeitung beginnen kann.

Die Empfangseinrichtung kann einen Zwischenspeicher umfassen, der eingerichtet ist, die zu empfangende Datei zwischenzuspeichern und als Datenstrom ab dem bestimmten Zeitpunkt an einen Ausgang des Zwischenspeichers abzugeben. Dabei kann der Datenstrom mit einer konstanten Ausspielrate abgegeben werden. Somit kann für eine Verarbeitung der Datei ein kontinuierlicher Datenstrom gewährleistet werden. Dem Zwischenspeicher kann also beispielsweise ein Datenstrom mit einer Datenrate oder Ausspielrate entnommen werden, die beispielsweise im Wesentlichen einer Abspielrate der Datei entspricht. Dadurch, dass der Datenstrom erst ab dem bestimmten Zeitpunkt abgegeben wird, kann gewährleistet werden, dass der Datenstrom unterbrechungsfrei abgegeben wird. Beispielsweise wird der Datenstrom mit einer konstanten Bitrate abgegeben.

In einem Aspekt der Erfindung ist die Auswerteeinrichtung eingerichtet, den Zeitpunkt in Abhängigkeit von Empfangsbedingungen des ersten Kanals und von Dateieigenschaften der zu empfangenden Datei zu bestimmen. Beispielsweise umfassen die Empfangsbedingungen des ersten Kanals eine Empfangsrate von Daten des ersten Kanals. Die Dateieigenschaften der Datei können eine Abspielrate der Datei umfassen. Somit kann zusätzlich zu den Ausspielparametern ausgewertet werden, mit welcher Datenrate die Datei, die über den ersten Kanal empfangen wird, zum Beispiel von einem nachgeschalteten Mediendecoder abgespielt werden kann. Beispielsweise kann ein Satz von Informationen ausgewählt werden, der der Abspielrate der Datei am besten entspricht. Andere Kombinationen der Informationen in Kanal können genutzt werden um für die Abspielrate der Datei einen adäquaten Zeitpunkt des Abspielens zu bestimmen. Für die Wahl des Zeitpunkts des Abspielens kann zudem der Datenbedarf einer Verarbeitungseinrichtung, beispielsweise einem Abspielgerät, über die Abspielrate berücksichtigt werden.

Der wenigstens eine Satz von Informationen kann beispielsweise einen ersten Indikator für Übertragungseigenschaften des ersten Kanals umfassen. Der erste Indikator kann eine Verlustrate des ersten Kanals angeben.

Der wenigstens eine Satz von Informationen kann auch einen zweiten Indikator für Übertragungseigenschaften des ersten Kanals umfassen. Dabei ist es möglich, dass der zweite Indikator eine Wahrscheinlichkeit für ein Erreichen der Abspielrate des ersten Kanals oder eine Wahrscheinlichkeit für die Häufigkeit der Notwendigkeit einer Unterbrechung und Zwischenpufferung des Ausspielens im ersten Kanal angibt falls der Empfänger die Übertragungseigenschaften entsprechend des ersten Indikators erfährt. Damit können beispielsweise Paketverluste in einer Internet-Protokoll, IP basierten Verbindung für die Bestimmung des Zeitpunkts berücksichtigt werden. Der zweite Indikator kann beispielsweise die Wahrscheinlichkeit umfassen, dass der Empfänger die zugehörige Ausspielrate für eine Mediendatei, die über den ersten Kanal empfangen wird, einhalten kann. Er kann aber auch Informationen darüber liefern, mit welcher Wahrscheinlichkeit Daten im ersten Kanal gepuffert werden. Beispielsweise gibt er die Häufigkeit der Notwendigkeit einer Unterbrechung und Zwischenpufferung des Ausspielens im ersten Kanal an, falls der Empfänger die Übertragungseigenschaften entsprechend des ersten Indikators erfährt.

Einer oder mehrere Sätze von Informationen, die eine Ausspielrate, eine Verzögerungszeit, einen oder mehrere der Indikatoren oder weitere Parameter umfassen können, werden in einer Empfangseinrichtung ausgewertet und dienen der Ermittlung eines geeigneten Zeitpunkts für den Beginn eines Ausspielens beziehungsweise einer Verarbeitung der zu übertragenen Datei. Ein Satz kann als Zusicherung eines Senders verstanden werden, dass die durch den Satz festgelegten Übertragungsbedingungen für einen den Übertragungsbedingungen entsprechenden Empfänger gelten sollen. Eine Empfangseinrichtung, die sich an die Vorgaben gemäß dem Satz von Informationen hält, kann demnach erfolgreich und verzögerungsfrei zu dem ermittelten Zeitpunkt mit einer Verarbeitung der Datei beginnen. Somit wird verbessert erreicht, dass während des Herunterladens einer Datei eine verzögerungsfreie Verarbeitung der Datei ermöglicht wird.

In einem weiteren Aspekt der Erfindung kann der wenigstens eine Satz von Informationen einen Parameter über eine Zeitdauer umfassen, für die der Satz von Informationen jeweils gültig ist. Dadurch kann vom Sender beispielsweise die Dauer einer Übertragungssitzung, das heißt, die Dauer bis zum vollständigen Empfang der Datei vorgeben werden. Alternativ kann so die Dauer einer Mediendatei, die übertragen wird, übermittelt werden.

Die Mittel zum Empfangen können derart eingerichtet sein, dass die Ausspielparameter vor der zu empfangenden Datei empfangen werden. Somit kann eine möglichst frühe Bestimmung des Zeitpunkts für die Verarbeitung gewährleistet werden.

Die Empfangseinrichtung kann die zu empfangende Datei in Blöcken empfangen. Dabei können die Blöcke mit Fehlerkorrekturdaten versehen empfangen werden. Die Blöcke können weiterhin auf verschiedene Weisen empfangen werden. Beispielsweise werden die Blöcke sequenziell empfangen. Alternativ umfasst der erste Kanal mehrere Teilkanäle und die Empfangseinrichtung empfängt die Blöcke parallel über die Teilkanäle. Die Teilkanäle können auch als logische Kanäle ausgebildet sein.

Die Blöcke können ferner nach einem Spreizverfahren oder Verwürfelungsverfahren, englisch interleaving, empfangen werden. Dabei kann die Reihenfolge der übertragenen Blöcke verändert werden, indem zum Beispiel Teilblöcke eines Blocks zwischen Teilblöcken eines anderen Blocks empfangen werden. Die Blöcke können auch wiederholt empfangen werden. Dabei kann man von einem Karussell, englisch Carrousel, Verfahren sprechen. Die Blöcke können unter Anwendung eines Fountain-Codes empfangen werden. Dabei sind die Blöcke nach dem Prinzip der Digital-Fountains codiert. Die Blöcke können auch gemäß dem FLUTE-Protokoll empfangen werden.

Für die Fehlerkorrekturdaten werden vorzugsweise Daten nach dem Vorwärtsfehlerkorrekturverfahren, englisch forward error correction, FEC eingesetzt.

Die verschiedenen Möglichkeiten zum Empfang der Datei in Blöcken sind bei der Bestimmung des Zeitpunkts für die Verarbeitung zu berücksichtigen.

In einer weiteren Ausführungsform umfasst eine Sendeeinrichtung zum blockbasierten Übertragen von Dateien über einen ersten Kanal Mittel zum Übermitteln von Ausspielparametern über einen zweiten Kanal. Die Mittel zum Übermitteln weisen wenigstens einen Satz von Informationen über eine Ausspielrate und eine Verzögerungszeit für eine über den ersten Kanal zu übertragende Datei auf.

In der Sendeeinrichtung kann eine Datei über den ersten Kanal an einen Empfänger übertragen werden. Der Empfänger kann beispielsweise eine erfindungsgemäße Empfangseinrichtung sein. Über einen zweiten Kanal werden dabei Ausspielparameter an die Empfangseinrichtung übermittelt. Der Empfänger kann diese Ausspielparameter auswerten und in Abhängigkeit der Ausspielräte und der Verzögerungszeit einen Zeitpunkt wählen, ab dem er mit einer Verarbeitung der über den ersten Kanal übertragenden Datei beginnt. Die Ausspielparameter sind dabei so gestaltet, dass im Empfänger ab dem gewählten Zeitpunkt eine unterbrechungsfreie Verarbeitung möglich wird, während die Datei weiter übertragen beziehungsweise empfangen wird.

Die Verzögerungszeit kann also eine Information über einen Zeitpunkt repräsentieren, ab dem eine Verarbeitung der zu übertragenden Datei in einer Empfangseinrichtung verzögerungsfrei erfolgen kann, wenn die Datei, die über den ersten Kanal empfangen wird, mit der Ausspielrate ausgespielt wird. Die verzögerungsfreie und unterbrechungsfreie Bearbeitung der Datei, also beispielsweise ein Abspielen der Datei, soll dabei bis zum Dateiende gewährleistet sein.

In einem Aspekt der Erfindung umfasst der wenigstens eine Satz von Informationen einen ersten Indikator für Übertragungseigenschaften des ersten Kanals, der eine Verlustrate des ersten Kanals angibt. Der wenigstens eine Satz von Informationen kann einen zweiten Indikator für Übertragungseigenschaften des ersten Kanals umfassen. Der zweite Indikator kann eine Wahrscheinlichkeit für ein Erreichen der Ausspielrate für eine über den ersten Kanal gesendete beziehungsweise übertragene Datei angeben. Der zweite Indikator kann auch eine Wahrscheinlichkeit für eine Pufferung im ersten Kanal angeben.

Der wenigstens eine Satz von Informationen, der von der Sendeeinrichtung übermittelt wird kann einen Parameter über eine Zeitdauer umfassen, für die der Satz von Informationen gültig ist. Beispielsweise kann so die Dauer einer Mediendatei, die übertragen wird, übermittelt werden.

In einem weiteren Aspekt der Erfindung sind die Mittel zum Übermitteln derart eingerichtet, dass die Ausspielparameter vor der zu übertragenden Datei übermittelt werden. Dadurch wird es einer Empfangseinrichtung ermöglicht, den Zeitpunkt für einen Beginn einer Verarbeitung oder einen Abspielbeginn frühzeitig vor oder während des Empfangens der Datei festzulegen. In einem anderen Aspekt der Erfindung umfasst die Sendeeinrichtung eine Einrichtung zur Erzeugung der Ausspielparameter. Dabei werden beispielsweise die Ausspielparameter aus Parametern abgeleitet, die von der Sendeeinrichtung für eine Empfangseinrichtung als hypothetisch angenommen werden, wie zum Beispiel Übertragungseigenschaften des ersten Kanals. Zusätzlich können die Ausspielparameter beispielsweise von der Art und Weise der Übertragung bestimmt durch die Sendeeinrichtung oder anderen Parametern abgeleitet werden.

Die Sendeeinrichtung kann auch eine Einrichtung zur Speicherung der Ausspielparameter umfassen. Somit können vorab ermittelte Ausspielparameter abgespeichert und jeweils bei Bedarf über die Mittel zum Übermitteln übertragen werden.

Die Sendeeinrichtung kann die zu sendende Datei in Blöcken über den ersten Kanal senden, wobei die Blöcke in entsprechender Art und Weise gesendet werden, wie zuvor bei der erfindungsgemäßen Empfangseinrichtung beschrieben.

In einer weiteren Ausführungsform umfasst ein System zur Dateiübertragung einen ersten Kanal für eine blockbasierte Übertragung von Dateien und einen zweiten Kanal für eine Übermittlung von Ausspielparametern, die wenigstens einen Satz von Informationen über eine Ausspielrate und eine Verzögerungszeit für eine über den ersten Kanal zu übertragende Datei umfassen. Das System weist ferner eine Sendeeinrichtung zum Senden der Datei über den ersten Kanal und zum Senden der Ausspielparameter über den zweiten Kanal sowie eine Empfangseinrichtung zum Empfangen der Datei und der Ausspielparameter auf. Die Verzögerungszeit repräsentiert dabei eine Information über einen Zeitpunkt, ab dem eine Verarbeitung der Datei in der Empfangseinrichtung verzögerungsfrei erfolgen kann, wenn die Datei, die im ersten Kanal empfangen wird mit der Ausspielrate ausgespielt wird.

Somit wird erreicht, dass die Empfangseinrichtung während des Herunterladens der Datei mit der Verarbeitung der Datei beginnen kann, wobei die Verarbeitung verzögerungsfrei und unterbrechungsfrei bis zum Ende der Datei erfolgt.

Der wenigstens eine Satz von Informationen kann einen ersten Indikator für Übertragungseigenschaften des ersten Kanals umfassen, der eine Verlustrate des ersten Kanals angibt. Ferner kann der wenigstens eine Satz von Informationen auch einen zweiten Indikator für Übertragungseigenschaften des ersten Kanals umfassen, der eine Wahrscheinlichkeit für ein Erreichen der Abspielrate der über den ersten Kanal empfangenen Datei angibt oder eine Wahrscheinlichkeit für die Häufigkeit einer Unterbrechung des Abspielens und einer resultierenden Zwischenpufferung der über den ersten Kanal übertragenen Dateien angibt.

In dem System kann der wenigstens eine Satz von Informationen einen Parameter über eine Zeitdauer umfassen, für die der Satz von Informationen gültig ist. Die Sendeeinrichtung des Systems kann dazu eingerichtet sein, die Ausspielparameter vor der Datei zu senden.

Auch in dem System kann die Datei in Blöcken übertragen werden. Die Übertragungsmöglichkeiten für die Blöcke entspricht den bei der erfindungsgemäßen Empfangseinrichtung beschriebenen Möglichkeiten.

Einer weitere Ausführungsform der Erfindung sieht ein Verfahren zum blockbasierten Empfang einer Datei vor. Dabei wird die Datei über einen ersten Kanal empfangen. Zusätzlich werden über einen zweiten Kanal Ausspielparameter empfangen, die wenigstens einen Satz von Informationen über eine Ausspielrate und eine Verzögerungszeit für die über den ersten Kanal zu empfangende Datei umfassen. In Abhängigkeit der Ausspielparameter wird ein Zeitpunkt für einen Beginn einer Verarbeitung der Datei bestimmt.

Da der Zeitpunkt, welcher aus den Ausspielparametern bestimmt wird, auch vor dem Ende einer vollständigen Übertragung der Datei liegen kann, wird eine verzögerungsfreie Verarbeitung der Datei noch während des Herunterladens der Datei ermöglicht.

In einem Aspekt des Verfahrens wird die Datei in einem Zwischenspeicher zwischengespeichert und als Datenstrom ab dem bestimmten Zeitpunkt an einem Ausgang des Zwischenspeichers abgegeben. Dabei kann.der Datenstrom mit einer konstanten Ausspielrate abgegeben werden. Somit kann für eine Verarbeitung der Datei ein kontinuierlicher Datenstrom gewährleistet werden.

In einem Aspekt des Verfahrens wird der Zeitpunkt in Abhängigkeit von Empfangsbedingungen des ersten Kanals und von Dateieigenschaften der Datei bestimmt. Beispielsweise umfassen die Empfangsbedingungen des ersten Kanals eine Empfangsrate des ersten Kanals. Somit kann bei der Bestimmung des Zeitpunkts eine reale Empfangsrate für Daten des ersten Kanals mit der Ausspielrate aus dem wenigstens einen Satz von Informationen in Beziehung gesetzt werden. Ferner können die Dateieigenschaften der Datei eine Abspielrate der Datei umfassen. Dadurch wird festgelegt, mit welcher Rate Daten für die Verarbeitung der Datei zur Verfügung gestellt werden müssen, um eine unterbrechungsfreie Verarbeitung gewährleisten zu können. Ferner kann auch die Übertragungsrate in dem Satz von Informationen mitgeliefert und bei der Bestimmung des Zeitpunkts berücksichtigt werden.

In einem weiteren Aspekt des Verfahrens umfasst der wenigstens eine Satz von Informationen einen ersten Indikator für Übertragungseigenschaften des ersten Kanals, wobei der erste Indikator beispielsweise eine Verlustrate des ersten Kanals angibt. Der wenigstens eine Satz von Informationen kann auch einen zweiten Indikator für Übertragungseigenschaften des ersten Kanal umfassen, wobei der zweite Indikator eine Wahrscheinlichkeit für ein Erreichen der Abspielrate des ersten Kanals oder eine Wahrscheinlichkeit für die Häufigkeit einer Unterbrechung und einer daraus resultierenden Zwischenpufferung der über den ersten Kanal empfangenen Datei angeben kann. Der wenigstens eine Satz von Informationen kann auch einen Parameter über eine Zeitdauer umfassen, für die der Satz von Informationen gültig ist.

In einem weiteren Aspekts des Verfahrens werden die Ausspielparameter vor der zu empfangenden Datei empfangen.

Einer weitere Ausführungsform der Erfindung sieht ein Verfahren zum blockbasierten Senden einer Datei vor. Dabei werden Ausspielparameter über einen zweiten Kanal übermittelt, die wenigstens einen Satz von Informationen über eine Abspielrate und eine Verzögerungszeit für die über einen ersten Kanal zu übertragende Datei umfassen. Die zu übertragende Datei wird über den ersten Kanal gesendet. Durch die über den zweiten Kanal übermittelten Ausspielparameter kann erreicht werden, dass während des Sendens beziehungsweise Übertragens der Datei auf Empfängerseite mit einer Verarbeitung der Datei begonnen werden kann ohne dass es zu Unterbrechungen bei der Verarbeitung kommt.

Die Verzögerungszeit kann dabei eine Information über einen Zeitpunkt repräsentieren, ab dem eine Verarbeitung der zu übertragenden Datei mit der Ausspielrate in einer Empfangseinrichtung verzögerungsfrei erfolgen kann. Dies kann insbesondere dann gelten, wenn die Datei im ersten Kanal mit einer festgelegten Übertragungsrate übertragen wird.

In einem Aspekt des Verfahrens umfasst der wenigstens eine Satz von Informationen einen ersten Indikator für Übertragungseigenschaften des ersten Kanals, der eine Verlustrate des ersten Kanals angibt. Der wenigstens eine Satz von Informationen kann auch einen zweiten Indikator für Übertragungseigenschaften des ersten Kanals umfassen, wobei der zweite Indikator eine Wahrscheinlichkeit für ein Erreichen der Ausspielrate des ersten Kanals oder eine Wahrscheinlichkeit für die Häufigkeit einer Unterbrechung des Ausspielens.mit der Ausspielrate und einer daraus resultierenden Zwischenpufferung der über den ersten Kanal empfangenen Datei angeben kann. Der wenigstens eine Satz von Informationen kann einen Parameter über eine Zeitdauer umfassen, für die der Satz von Informationen gültig ist.

Vorzugsweise werden die Ausspielparameter vor der zu übertragenden Datei übermittelt.

Im Folgenden wird die Erfindung anhand von Ausführungsbeispielen unter Bezugnahme auf die Zeichnungen im Detail erläutert.

Es zeigen:
- Figur 1: ein erstes Ausführungsbeispiel einer erfindungsgemäßen Anordnung,
- Figur 2: ein erstes Diagramm einer beispielhaften Übertragung über die Zeit,
- Figur 3: ein zweites Diagramm einer beispielhaften Übertragung über die Zeit,
- Figur 4: ein zweites Ausführungsbeispiel einer erfindungsgemäßen Anordnung und
- Figur 5: ein Ausführungsbeispiel für eine Aufteilung einer Datei gemäß der Erfindung.

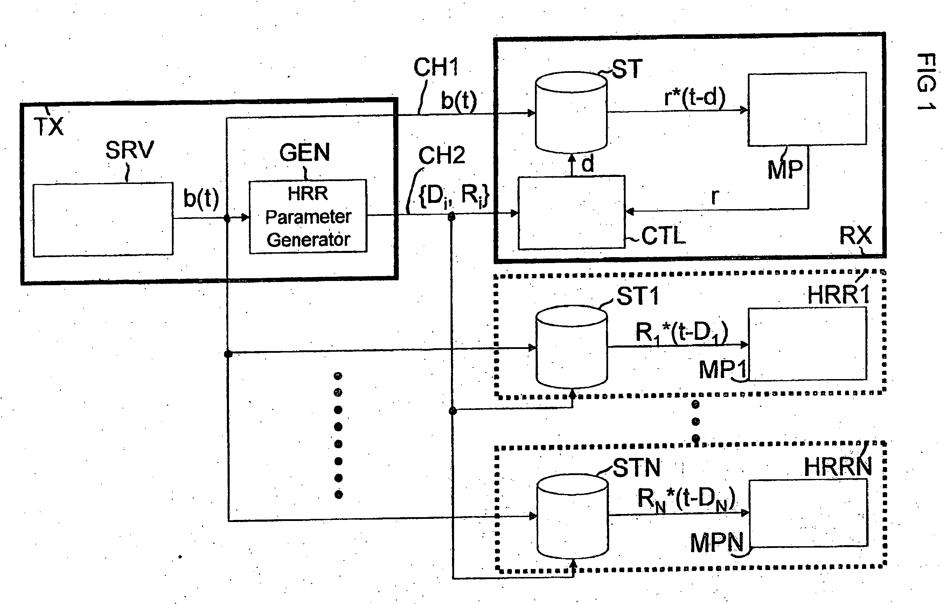

Figur 1 zeigt ein erstes Ausführungsbeispiel einer erfindungsgemäßen Anordnung mit einer Sendeeinrichtung TX und einer Empfangseinrichtung RX. Zur Übertragung von Dateien von der Sendeeinrichtung TX zur Empfangseinrichtung RX ist ein erster Kanal CH1 vorgesehen. Über einen zweiten Kanal CH2 werden Ausspielparameter Dᵢ, Rᵢ übertragen. In der Sendeeinrichtung TX ist eine Einrichtung SRV zum Bereitstellen der zu übertragenden Datei vorgesehen, die beispielsweise als Dateiserver ausgebildet ist. Ferner umfasst die Sendeeinrichtung TX einen Parametergenerator GEN, welcher Mittel zum Übermitteln von Ausspielparametern Dᵢ, Rᵢ und eine Einrichtung zur Erzeugung der Ausspielparameter Dᵢ, Rᵢ umfasst. Der Parametergenerator GEN ist eingangsseitig an den ersten Kanal CH1 angeschlossen, um in Abhängigkeit der Daten auf dem ersten Kanal CH1 entsprechende Ausspielparameter Dᵢ, Rᵢ abgeben zu können. Über die Ausspielparameter könnte auch eine Übertragungsrate mitgeliefert werden.

Die Empfangseinrichtung RX umfasst einen Zwischenspeicher ST, der eingangsseitig mit dem ersten Kanal verbunden ist. Der Zwischenspeicher kann etwa durch einen Hauptspeicher oder ein beliebiges anderes Speichermedium ausgeführt sein. Ferner umfasst die Empfangseinrichtung RX eine Auswerteeinrichtung CTL, die an den zweiten Kanal CH2 angeschlossen ist. Zudem ist beispielhaft ein Medienabspieler MP vorgesehen, der einen Datenstrom aus dem Zwischenspeicher ST empfangen kann. In diesem Ausführungsbeispiel dient der Medienabspieler MP gleichzeitig zur Ermittlung einer Abspielrate r, welche an die Auswerteeinrichtung CTL abgegeben wird und mit welcher Rate der Zwischenspeicher ST die Daten an den Medienabspieler MP abgeben soll.

Zusätzlich sind beispielhaft zwei von mehreren Modellen von Referenzempfängern HRR1 und HRRN dargestellt, die auch als hypothetische Referenzempfänger bezeichnet werden können. Die hypothetischen Referenzempfänger HRR1, HRRN repräsentieren jeweils ein hypothetisches Modell für eine Empfangseinrichtung, bei der eine Verarbeitung der zu übertragenden Datei beziehungsweise ein Abspielen mit einer Rate R₁ beziehungsweise R_{N} möglich ist, wenn mit dem Beginn des Abspielens beziehungsweise der Verarbeitung eine Verzögerungszeit D₁ beziehungsweise D_{N} gewartet wird. Dazu sind in den hypothetischen Referenzempfängern HRR1, HRRN hypothetische Zwischenspeicher ST1, STN und hypothetische Medienabspieler MP1, MPN vorgesehen. Bei den hypothetischen Referenzempfängern HRR1, HRRN wird davon ausgegangen, dass im ersten Kanal CH1 optimale Übertragungsbedingungen herrschen, so, als wären sie direkt am Ausgang der Sendeeinrichtung TX angeschlossen.

Der Sender garantiert den hypothetischen Referenzempfängern HRR1, HRRN, dass, wenn eine Verzögerung von mindestens D₁ beziehungsweise mindestens D_{N} gewartet wird, eine Ausspielrate von bis zu R₁ beziehungsweise bis zu R_{N} eingehalten werden kann. Diese Ausspielparameter Dᵢ, Rᵢ, die einen hypothetischen Referenzempfänger beschreiben, werden nun vom realen Empfänger RX genutzt, um zusammen mit der notwendigen Abspielrate r der Mediendatei einen günstigen Ausspielzeitpunkt zu bestimmen.

Die gezeigte Anordnung ist beispielsweise für eine Broadcast Übertragung nach dem MBMS- oder dem DVB-H-Standard einsetzbar. Der erste und der zweite Kanal CH1, CH2 sind dabei in der Regel logische Kanäle in einem Übertragungssystem. Beispielsweise repräsentiert ein Kanal eine Verbindung auf einer Ebene beziehungsweise Schicht des Open Systems Interconnection Reference Model, OSI-Modells, welches ein Schichtenmodell ist. Ein Kanal lässt sich dabei auch über mehrere Teilkanäle bilden.

Die Sendeeinrichtung TX ist beispielsweise in einer Basisstation für ein Mobilfunksystem oder in einem Broadcast-Multicast Switching Center in einem Mobilfunknetz angeordnet. Die Empfangseinrichtung RX kann von einem mobilen Empfangsgerät, beispielsweise einem Mobilfunkgerät umfasst sein.

Über den ersten Kanal CH1 wird beispielsweise eine Multimedia-Datei übertragen, etwa eine Musik-Datei im MP3-Format oder eine Datei gemäß der 3G Spezifikation mit der Endung 3gr6 entsprechend dem "progressive download"-Verfahren.

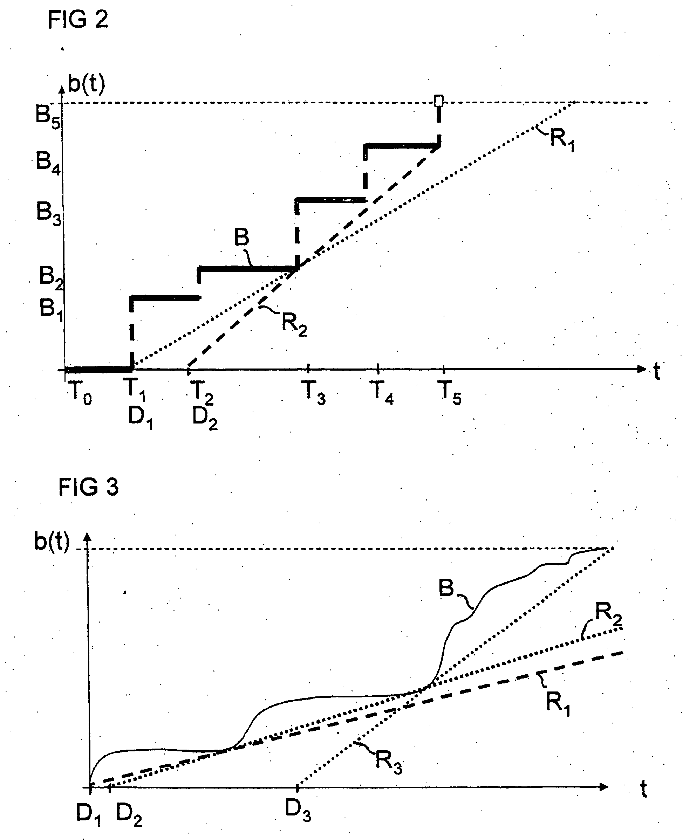

In Figur 2 ist ein beispielhafter zeitlicher Verlauf von zu übertragenden Daten b(t) einer Datei über den ersten Kanal CH1 dargestellt. Die treppenförmige Kurve B stellt den Verlauf der übertragenden Menge an Daten dar, wie er effektiv über den ersten Kanal erfolgt. Die Übertragung erfolgt hier blockweise, so dass zum Zeitpunkt T₁ die Menge B₁ an einer Empfangseinrichtung verfügbar ist, zum Zeitpunkt T₂ die Menge B₂, zum Zeitpunkt T₃ die Menge B₃, zum Zeitpunkt T₄ die Menge B₄ und zum Zeitpunkt T₅ die Menge B₅, was der komplett übertragenden Datei entspricht.

Ein hypothetischer Referenzempfänger HRR1, in dem die Datei mit einer Ausspielrate R₁ verarbeitet werden soll, hat gemäß dem Diagramm eine Verzögerungszeit D₁ einzuhalten, um eine unterbrechungsfreie Verarbeitung gewährleisten zu können.

Für einen hypothetischen Referenzempfänger mit einer Ausspielrate R₂ ist dementsprechend eine Verzögerungszeit D₂ vorzusehen, um die unterbrechungsfreie Verarbeitung zu ermöglichen.

Figur 3 stellt ein weiteres zeitliches Diagramm für die Übertragung einer Datei dar. Der beispielhafte Übertragungsverlauf B eines ersten Kanals stellt eine kontinuierlich empfangene Datei mit variabler Bitrate dar. Verschiedene Kombinationen von Sätzen von Informationen D₁, R₁ beziehungsweise D₂, R₂, beziehungsweise D₃, R₃ repräsentieren mögliche hypothetische Referenzempfänger.

Die Sendeeinrichtung TX in Figur 1 gibt durch Übermittlung der Ausspielparameter Dᵢ, Rᵢ an die hypothetischen Referenzempfänger HRR1, HRRN beziehungsweise die Empfangseinrichtung RX eine Garantie, dass bei einer bestimmten Übertragungsrate ein unterbrechungsfreies Verarbeiten bzw. Ausspielen der Datei mit einer Rate bis zur Ausspielrate Rᵢ möglich ist wenn eine Verzögerungszeit von mindestens Dᵢ eingehalten wird. Dabei basiert diese Garantie auf der Einrichtung der Übertragungssitzung, dem Sendeverhalten der Sendeeinrichtung TX und einem Codierungsverhalten beispielsweise der Einrichtung SRV. Insbesondere die Ausprägung einer Vorwärtsfehlerkorrektur ist dabei zu berücksichtigen. Eine Übertragungsrate bezieht sich dabei beispielsweise auf die Übertragung über eine bestimmte Schicht gemäß dem OSI-Modell, die unterhalb der Schicht liegt, auf der die FEC angewendet wird.

Verschiedene Sätze von Informationen Dᵢ, Rᵢ können auch an geändertes Übertragungsverhalten der Sendeeinrichtung TX angepasst sein. Beispielsweise sollten eine Veränderung einer momentanen Übertragungsrate der Datei, ein Interleaving der Datei, also ein Senden in nichtkontinuierlicher Reihenfolge, ein wiederholtes Senden der Datei in irgendeiner Weise, oder das Bilden von Blöcken innerhalb der Datei berücksichtigt werden.

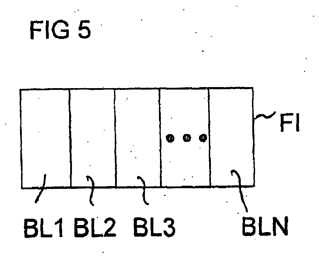

In Figur 5 ist beispielsweise gezeigt wie eine Datei FI in mehrere Blöcke BL1, BL2, BL3 bis BLN aufgeteilt wird. Das Aufteilen kann beispielsweise für den Fall einer Übertragung gemäß dem FLUTE-Protokoll, einer systematischen Codierung für eine Vorwärtsfehlerkorrektur mit einer bestimmten Coderate oder für eine nichtsystematische Codierung für eine Vorwärtsfehlerkorrektur mit einer bestimmten Coderate erfolgen. Ebenso kann sich das Übertragungsverhalten der Sendeeinrichtung TX ändern, wenn eine Codierung nach dem Digital-Fountain-Prinzip mit einer sehr geringen Coderate oder einer Coderate, die nahezu Null ist, erfolgt.

Wenn die in Figur 2 und Figur 3 gezeigten Kennlinien mit den Ausspielraten R₁, R₂, R₃ an keiner Stelle, das heißt zu keinem Zeitpunkt eine Datenmenge erreichen, die größer ist als die jeweilige Datenmenge b(t) der Kennlinie B, stellen diese ein Maß für das angenommene Übertragungsverhalten der Sendeeinrichtung TX dar. Über die Sätze von Informationen Dᵢ, Rᵢ kann der Empfangseinrichtung RX somit ein passendes Bild des zu erwartenden Übertragungsverhaltens der Sendeeinrichtung TX vermittelt werden. Dabei ist zu beachten, dass nur der zusammengehörige Anteil der Datei vom Anfang der Datei an als relevant angesehen werden kann, obwohl bei bestimmten Übertragungsverfahren wie Interleaving zeitlich später zuordenbare Daten durchaus früher ankommen können als davor liegende. Ebenso ist zu beachten, dass eine Verfügbarkeit der Daten im Empfänger nichts darüber aussagt, ob die Daten vor einer Verarbeitung noch decodiert werden, also zum Beispiel durch Ausnutzen des Vorwärtsfehlerschutzes rekonstruiert werden sollen, oder direkt verarbeitbar beziehungsweise abspielbär sind.

Die Ausspielparameter Dᵢ, Rᵢ werden zusammen mit lokalen Informationen, das heißt Informationen über Empfangseigenschaften des ersten Kanals CH1, Dateieigenschaften der übertragenden Datei, wie etwa eine Abspielrate oder auch lokalen Sicherheitsspielräumen oder Verzögerungsparametern in der Auswerteeinrichtung CTL ausgewertet. Somit lässt sich eine lokale Verzögerungszeit d ermitteln, die angibt, wie lange beispielsweise der Zwischenspeicher ST ab dem Empfang des Beginns der Datei warten soll, bis ein kontinuierlicher Datenstrom an den Medienabspieler MP abgegeben wird. Der Ausdruck r*(t-d) entspricht dabei einer zum Zeitpunkt t verarbeiteten und ausgespielten Datenmenge. In der Empfangseinrichtung RX wird damit sozusagen durch den Zwischenspeicher ST und die lokale Verzögerungszeit d ein Datenstrom mit einer konstanten Bitrate emuliert. Als Beginn des Empfangs der Datei kann beispielsweise der Empfang eines ersten Bytes der Datei definiert werden.

Die Sendeeinrichtung TX kann häufig von einem deterministischen Verhalten beim Senden der Datei über den ersten Kanal ausgehen. Da die Sendeeinrichtung TX aber unter Umständen keinen Einfluss auf Übertragungseigenschaften des ersten Kanals CH1 hat, ist eine Übertragung über den ersten Kanal CH1 auch von zufälligen Prozessen abhängig. Beispielsweise gehen mit einer bestimmten Wahrscheinlichkeit p Teile der zu übertragenden Datei verloren, beispielsweise durch verlorene IP-Pakete. Für die Berechnung der effektiven Verzögerungszeit d in der Empfangseinrichtung RX können auch verschiedene Verzögerungszeiten des Kanals CH1 berücksichtigt werden. Beispielsweise kann der Kanal CH1 eine feste Verzögerung aufweisen aufgrund von Laufzeiten, Interleaving, Vorwärtsfehlerkorrektur oder anderen Ursachen. Diese Kanalverzögerungszeit kann beispielsweise zu der Verzögerungszeit der Ausspielparameter Dᵢ in die Bestimmung der Verzögerung einbezogen werden.

In manchen Fällen ist die Verzögerung des Kanals nicht deterministisch, sondern zufällig. Dies kann aufgrund von wiederholten Übermittlungen auf niedrigeren Übertragungsschichten, Interleaving, Störungen, Priorisierung, statistischen Vielfachzugriff oder anderen Gründen erfolgen. Dennoch wird in vielen Übertragungsnetzwerken wie beispielsweise drahtlosen Netzwerken, eine Qualitätsgarantie für Dienste, Quality of Service, QoS in Form einer maximalen Verzögerung gegeben. In diesem Fall sollte diese maximale Verzögerung bei der Bestimmung der effektiven Verzögerung d miteinbezogen werden. Mehrere hypothetische Empfänger in verschiedenen Protokollebenen könnten berücksichtigt werden und gemeinsam mit in die Bestimmung der effektiven Verzögerung d miteinbezogen werden. Wenn eine Veränderung der Verzögerungszeit des Kanals zufällig ist, aber keine Garantien für eine Übertragung gegeben werden, sollte die Empfangseinrichtung RX eine effektive Verzögerungszeit d bestimmen, für die ein Datenstrom mit einer konstanten Bitrate beispielsweise aus dem Zwischenspeicher ST ermöglicht wird. Die von der Sendeeinrichtung übermittelten Ausspielparameter Dᵢ, Rᵢ können dennoch mit in die Bestimmung der effektiven Verzögerungszeit d miteinbezogen werden.

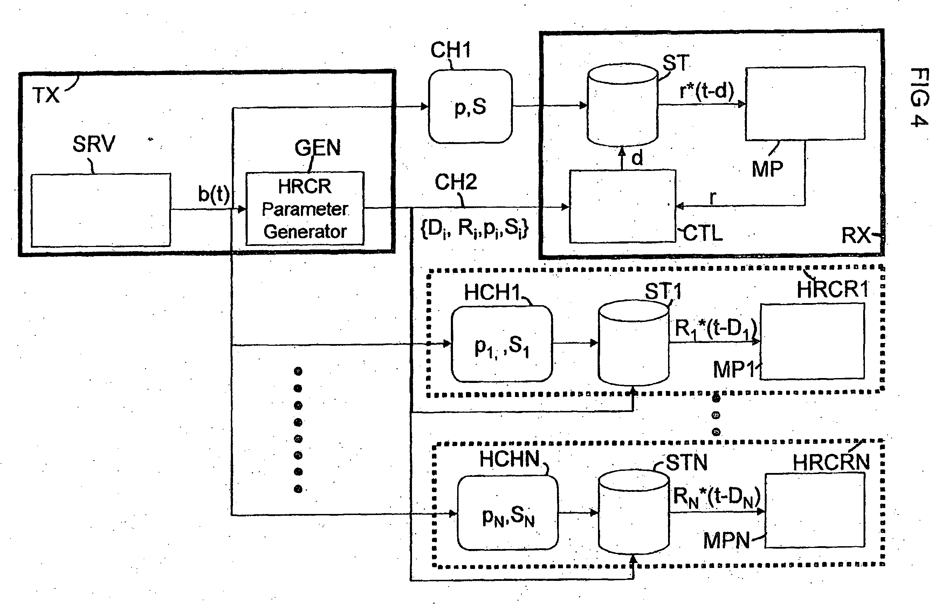

Figur 4 zeigt ein weiteres Ausführungsbeispiel einer erfindungsgemäßen Anordnung. Funktions- beziehungsweise wirkungsgleiche Bauelemente tragen dabei gleiche Bezugszeichen. Im Unterschied zu Figur 1 sind in Figur 4 anstelle der hypothetischen Referenzempfänger HRR1, HRRN hypothetische Referenzkanalempfänger HRCR1, HRCRN vorgesehen, die jeweils zusätzlich einen hypothetischen Kanal HCH1, HCHN aufweisen. Die Eigenschaften der hypothetischen Kanäle HCH1, HCHN sind durch Indikatoren Übertragungseigenschaften p₁, S₁, p_{N}, S_{N} gekennzeichnet. Beispielsweise stellen die Indikatoren p₁, p_{N} eine Verlustrate des jeweiligen Kanals dar, das heißt welcher Anteil von übertragenen Paketen üblicherweise nicht beim Empfänger ankommt. Ein weiterer Indikator S₁ beziehungsweise S_{N} gibt beispielsweise eine Wahrscheinlichkeit für ein Erreichen der Ausspielrate des jeweiligen Kanals an, falls die Verlustraten p₁ beziehungsweise p_{N} sind.

Die Ausspielparameter Dᵢ, Rᵢ, pᵢ, Sᵢ für die jeweiligen hypothetischen Referenzkanalempfänger HRCR1, HRCRN werden über den zweiten Kanal CH2 an die Auswerteeinrichtung CTL der Empfangseinrichtung RX übermittelt. Eine Ermittlung einer effektiven Verzögerungszeit d kann wie vorher auf Basis der lokalen Parameter, der Verzögerungszeiten Dᵢ, der Ausspielraten Rᵢ nun auch zusätzlich mit Wahrscheinlichkeitsmodellen für die hypothetischen Kanäle ermittelt werden.

Die Sendeeinrichtung TX kann zur Übertragung der Datei diese in einzelne Blöcke aufteilen. Die gesamte Datei oder die einzelnen Blöcke werden in Symbole aufgeteilt, die als Quellsymbole für einen Blockcode dienen. In Bezug auf die Blockgröße kann der Blockcode generisch und flexibel sein. Für jeden Block wird eine bestimmte Menge von Paritätssymbolen erzeugt, die entweder, für einen systematischen Code, die originalen Symbole enthalten oder, für einen nichtsystematischen Code, die Symbole nicht enthalten.

Es können alle oder nur ein Teil der erzeugten Symbole zu einem empfangsseitigen Decoder, der hier nicht gezeigt ist, übertragen werden. Der Decoder versucht, auch bei einer Nichtverfügbarkeit von einigen oder vielen der übertragenen Symbole den Block und somit auch die gesamte Datei wieder herzustellen. Dabei können wieder verschiedene Übertragungsstrategien beziehungsweise verschiedenes Übertragungsverhalten angewendet werden. Grundlage dafür sind beispielsweise die angewandte Blockgröße und der Algorithmus zur Blockbildung, die Wiederholung von Daten, die verwendete Codierrate, das Interleaving von Codiersymbolen, die zu verschiedenen Quellblöcken gehören, die Übertragung über verschiedene Teilkanäle, Garantien von verschiedenen Protokollschichten oder auch die Anwendung von wiederholtem Senden oder einer Codierung nach dem Digital-Fountain-Prinzip.

In dem Parametergenerator GEN in der Sendeeinrichtung TX, können verschiedene Kombinationen von Sätzen von Informationen als Ausspielparameter generiert werden und an die Empfangseinrichtung RX übermittelt werden. Durch das Übertragen der Ausspielparameter Dᵢ, Rᵢ, pᵢ, Sᵢ wird beispielsweise einem hypothetischen Referenzkanalempfänger garantiert, dass bei einer angenommenen Kanalverlustwahrscheinlichkeit pᵢ ein Datenstrom mit einer konstanten Bitrate von bis zu Rᵢ mit einer Erfolgswahrscheinlichkeit Sᵢ ausgespielt beziehungsweise verarbeitet werden kann, wenn von Beginn des Empfangs der Datei eine Verzögerungszeit von mindestens Dᵢ gewartet wird.

Die erfindungsgemäßen Ausspielparameter können beispielsweise als zusätzlicher Parameter im Session-Description-Protokoll, SDP übertragen werden. Es folgt ein Beispiel für Parameter einer MBMS-Download-Sitzung, bei der das FLUTE-Protokoll genutzt wird:

```
 v=0
 o=user123 2890844526 2890842807 IN IP6
          2201:056D::112E:144A:1E24
          s=File delivery session example
          i=More Information
          t=2873397496 2873404696
          a=mbms-mode:broadcast 1234
          a=FEC-declaration:0 encoding-id=1
          a=source-filter: incl IN IP6 *
           2001:210:1:2:240:96FF:FE25:8EC9
           a=flute-tsi:3
           m=application 12345 FLUTE/UDP 0
           c=IN IP6 FF1E:03AD::7F2E: 172A:1E24/1
           b=64
           a=lang:EN
           a=FEC:0
           a=hrr:2000,128 5000,256 7000,384 13000,inf
```

Die jeweils erste Zahl in dem HRR-Attribut in der letzten Zeile stellt die Verzögerungszeit in Millisekunden dar, während jeweils die zweite Zahl eine mögliche Ausspielrate des in kBit/s angibt. Mit diesen Parametern erklärt der Sender dass ein hypothetischer Referenzempfänger, wenn er mindestens 2000 ms wartet, eine Datenrate von bis zu 128 kBit/s ausspielen kann, wenn er mindestens 5000 ms wartet, eine Datenrate von bis zu 256 kBit/s ausspielen kann, und wenn er mindestens 7000 ms wartet, eine Datenrate von bis zu 384 kBit/s ausspielen kann. Wenn er mindestens 13000 ms wartet, wird garantiert, dass der Empfänger die gesamte Datei empfangen hat und auf einmal beziehungsweise vollständig, ausspielen beziehungsweise verarbeiten kann, beispielsweise bei einer Bilddatei oder einem Programmcode, Die Übertragungsrate ist in diesem Fall auf 64 kBit/s festgelegt, was durch das Feld b=64 an den Empfänger weitergegeben wird.

Als Beispiel für einen hypothetischen Referenzkanalempfänger können die Ausspielparameter beispielsweise in folgender Form gemäß dem Session-Description-Protokoll für eine MBMS-Download-Sitzung mit dem FLUTE-Protokoll übertragen werden:

```
 v=0
 o=user123 2890844526 2890842807 IN IP6
           2201:056D::112E:144A:1E24
           s=File delivery session example
 i=More information
 t=2873397496 2873404696
 a=mbms-mode:broadcast 1234
 a=FEC-declaration:0 encoding-id=1
 a=source-filter: incl IN IP6 *
          2001:210:1:2:240:96FF:FE25:8EC9
 a=flute-tsi:3
 m=application 12345 FLUTE/UDP 0
 c=IN IP6 FF1 E:O3AD::7F2E: 1 72A:1 E24/1
 b=64
 a=lang:EN
 a=FEC:0
 a=hrcr: 2000,128,0,1000 5000,256,0,1000 7000,384,0,1000
         13000,inf,0,1000
         a=hrcr: 2200,128,10,990 5500,256,10,990 11000,384,10,990
          20000,inf,10,990
```

Die jeweils erste Zahl in den HRCP-Attributen in den letzten zwei Zeilen beschreibt die Verzögerungszeit in Millisekunden, die jeweils zweite Zahl die Ausspielrate in kBit/s, die jeweils dritte Zahl eine Verlustrate des Kanals multipliziert mit 1000 und die jeweils vierte Zahl eine Erfolgswahrscheinlichkeit für Erreichen der Ausspielrate multipliziert mit 1000.

Mit diesen Parametern erklärt der Sender, dass ein hypothetischer Referenzempfänger, der einen fehlerfreien Kanal beobachtet, gekennzeichnet durch die dritte Zahl als 0, wenn er mindestens 2000 ms wartet, eine Datenrate von bis zu 128 kBit/s ausspielen kann, wenn er mindestens 5000 ms wartet, eine Datenrate von bis zu 256 kBit/s ausspielen kann, wenn er mindestens 7000 ms wartet, eine Datenrate von bis zu 384 kBit/s ausspielen kann, und wenn er mindestens 13000 ms wartet, die gesamte Datei empfangen hat und auf einmal beziehungsweise vollständig ausspielen beziehungsweise verarbeiten kann, beispielsweise bei einer Bilddatei oder einem Programmcode.

Mit dem zweiten Satz von Parametern erklärt der Sender, dass ein hypothetischer Referenzempfänger, der einen fehlerfreien Kanal mit statistisch unabhängiger Paketverlustrate von maximal 1% beobachtet, gekennzeichnet durch die dritte Zahl als 10, wenn er mindestens 2200 ms wartet, er mit einer Wahrscheinlichkeit von mindestens 99% eine Datenrate von bis zu 128 kBit/s ausspielen kann, und so weiter. Es ist wichtig, dass in diesem Fall der Sender von einem bestimmten Decodierverfahren am Empfänger ausgeht. In MBMS ist dieses Decodierverfahren beispielsweise vorgeschrieben. Die Übertragungsrate ist in diesem Fall beispielsweise wieder auf 64 kBit/s festgelegt, was durch das Feld b=64 an den Empfänger weitergegeben wird.

### Bezugszeichenliste

- TX:: Sendeeinrichtung
- RX:: Empfangseinrichtung
- SRV:: Einrichtung
- GEN:: Parametergenerator
- ST, ST1, STN:: Zwischenspeicher
- CTL:: Auswerteeinrichtung
- MP, MP1, MPN:: Medienabspieler
- CH1:: erster Kanal
- CH2:: zweiter Kanal
- Bᵢ, ..., B₅:: Übertragungsmenge
- b(t):: Übertragungsmenge
- D₁, D₂, D₃, Dᵢ, D_{N}:: Verzögerungszeit
- d:: effektive Verzögerungszeit
- r:: Abspielrate
- R₁, R₂, R₃, Rᵢ, R_{N}:: Ausspielrate
- T₀, ..., T₅:: Zeitpunkte
- p₁, pᵢ, p_{N}:: Verlustwahrscheinlichkeit
- S₁, Sᵢ, S_{N}:: Erfolgswahrscheinlichkeit
- HRR1, HRRN:: hypothetischer Referenzempfänger
- HRCR1, HRCRN:: hypothetischer Referenzkanalempfänger
- HCH1, HCHN:: hypothetischer Kanal
- FI:: Datei
- BL1, BL2, BL3, BLN:: Blöcke

## Patentansprüche

1. Empfangseinrichtung (RX) zum blockbasierten Empfang von Dateien über einen ersten Kanal (CHI),
umfassend
- Mittel zum Empfangen von Ausspielparametern (D₁, D₂, R₁, R₂) über einen zweiten Kanal (CH2); und
- eine Auswerteeinrichtung (CTL);
- die Mittel zum Empfangen eingerichtet sind, Ausspielparameter (D₁, D₂, R₁, R₂) zu empfangen, die wenigstens einen Satz (Dᵢ, Rᵢ) von Informationen über eine Ausspielrate (R₁, R₂) und eine Verzögerungszeit (D₁, D₂) für eine über den ersten Kanal (CH1) zu empfangende Datei (FI) umfassen; und
- die Auswerteeinrichtung (CTL) ausgelegt ist, einen Zeitpunkt für einen Beginn einer Verarbeitung der zu empfangenden Datei (FI) in Abhängigkeit der Ausspielparameter (D₁, D₂, R₁, R₂) zu bestimmen;
**dadurch gekennzeichnet, dass**
die Auswerteeinrichtung (CTL) eingerichtet ist, den Zeitpunkt in Abhängigkeit von Empfangsbedingungen des ersten Kanals (CH1) und von Dateieigenschaften der Datei (FI) zu bestimmen.

2. Empfangseinrichtung (RX) nach Anspruch 1,
umfassend einen Zwischenspeicher (ST), der eingerichtet ist, die zu empfangende Datei (FI) zwischenzuspeichern und als Datenstrom ab dem bestimmten Zeitpunkt an einem Ausgang des Zwischenspeichers (ST) abzugeben.

3. Empfangseinrichtung (RX) nach Anspruch 2,
bei der der Zwischenspeicher (ST) eingerichtet ist, den Datenstrom mit einer konstanten Bitrate abzugeben.

4. Empfangseinrichtung (RX) nach einem der Ansprüche 1 bis 3,
bei der die Empfangsbedingungen des ersten Kanals (CH1) eine Empfangsrate von Daten des ersten Kanals (CH1) umfassen.

5. Empfangseinrichtung (RX) nach Anspruch 4,
bei der die Dateieigenschaften der Datei (FI) eine Abspielrate der Datei (FI) umfassen.

6. Empfangseinrichtung (RX) nach einem der Ansprüche 1 bis 5, bei der der wenigstens eine Satz (Dᵢ, Rᵢ) von Informationen einen ersten Indikator (pᵢ) für Übertragungseigenschaften des ersten Kanals (CH1) umfasst.

7. Empfangseinrichtung (RX) nach Anspruch 6,
bei der der erste Indikator (pᵢ) eine Verlustrate des ersten Kanals (CH1) angibt.

8. Empfangseinrichtung (RX) nach Anspruch 6 oder 7,
bei der der wenigstens eine Satz (Dᵢ, Rᵢ) von Informationen einen zweiten Indikator (Sᵢ) für Übertragungseigenschaften des ersten Kanals (CH1) umfasst.

9. Empfangseinrichtung (RX) nach Anspruch 8,
bei der der zweite Indikator (Sᵢ) eine Wahrscheinlichkeit für ein Erreichen der Ausspielrate (R₁, R₂) angibt oder bei der der zweite Indikator (Sᵢ) eine Wahrscheinlichkeit für eine Pufferung im ersten Kanal (CH1) angibt.

10. Empfangseinrichtung (RX) nach einem der Ansprüche 1 bis 9,
bei der der wenigstens eine Satz (Dᵢ, Rᵢ) von Informationen einen Parameter über eine Zeitdauer umfasst, für die der Satz (Dᵢ, Rᵢ) von Informationen gültig ist.

11. Empfangseinrichtung (RX) nach einem der Ansprüche 1 bis 10,
bei der die Mittel zum Empfangen derart eingerichtet sind, dass die Ausspielparameter (D₁, D₂, R₁, R₂) vor der zu empfangenden Datei (FI) empfangen werden.

12. Empfangseinrichtung (RX) nach einem der Ansprüche 1 bis 11,
die eingerichtet ist, die zu empfangende Datei (FI) in Blöcken (BL1, BL2, BL3, BLN) zu empfangen.

13. Empfangseinrichtung (RX) nach Anspruch 12,
die eingerichtet ist, die Blöcke (BL1, BL2, BL3, BLN) mit Fehlerkorrekturdaten zu empfangen.

14. Empfangseinrichtung (RX) nach Anspruch 12 oder 13, die eingerichtet ist, die Blöcke (BL1, BL2, BL3, BLN) sequentiell zu empfangen; oder bei der der erste Kanal mehrere Teilkanäle umfasst und die Empfangseinrichtung (RX) eingerichtet ist, die Blöcke (BL1, BL2, BL3, BLN) parallel über die Teilkanäle zu empfangen; oder die eingerichtet ist, die Blöcke (BL1, BL2, BL3, BLN) nach einem Spreizverfahren oder einem Verwürfelungsverfahren zu empfangen; oder die eingerichtet ist, die Blöcke (BL1, BL2, BL3, BLN) wiederholt zu empfangen; oder die eingerichtet ist, die Blöcke (BL1, BL2, BL3, BLN) unter Anwendung eines Fountain Codes zu empfangen; oder die eingerichtet ist, die Blöcke (BL1, BL2, BL3, BLN) gemäß dem FLUTE Protokoll zu empfangen.

15. Sendeeinrichtung (TX) zum blockbasierten Übertragen von Dateien über einen ersten Kanal (CH1),
umfassend
- Mittel zum Übermitteln von Ausspielparametern (D₁, D₂, R₁, R₂) über einen zweiten Kanal (CH2); - die Mittel zum Übermitteln ausgelegt sind, Ausspielparameter (D₁, D₂, R₁, R₂) zu übermitteln, die wenigstens einen Satz (Dᵢ, Rᵢ) von Informationen über eine Ausspielrate (R₁, R₂) und eine Verzögerungszeit (D₁, D₂) für eine über den ersten Kanal (CH1) zu übertragende Datei (FI) umfassen;
**dadurch gekennzeichnet, dass**
der wenigstens eine Satz (Dᵢ, Rᵢ) von Informationen einen ersten Indikator (pᵢ) für Übertragungseigenschaften des ersten Kanals (CH1) umfasst, der eine Verlustrate des ersten Kanals (CH1) angibt.

16. Sendeeinrichtung (TX) nach Anspruch 15,
bei der die Verzögerungszeit (D₁, D₂) eine Information über einen Zeitpunkt repräsentiert, ab dem eine Verarbeitung der zu übertragenden Datei (FI) in einer Empfangseinrichtung (RX) mit der Ausspielrate (R₁, R₂) verzögerungsfrei erfolgen kann.

17. Sendeeinrichtung (TX) nach Anspruch 15 oder 16,
bei der der wenigstens eine Satz (Dᵢ, Rᵢ) von Informationen einen zweiten Indikator (Sᵢ) für Übertragungseigenschaften des ersten Kanals (CH1) umfasst.

18. Sendeeinrichtung (TX) nach Anspruch 17,
bei der der zweite Indikator (Sᵢ) eine Wahrscheinlichkeit für ein Erreichen der Ausspielrate (R₁, R₂) angibt; oder bei der der zweite Indikator (Sᵢ) eine Wahrscheinlichkeit für eine Pufferung im ersten Kanal (CH1) angibt.

19. Sendeeinrichtung (TX) nach einem der Ansprüche 15 bis 18, bei der der wenigstens eine Satz (Dᵢ, Rᵢ) von Informationen einen Parameter über eine Zeitdauer umfasst, für die der Satz (Dᵢ, Rᵢ) von Informationen gültig ist.

20. Sendeeinrichtung (TX) nach einem der Ansprüche 15 bis 19, bei der die Mittel zum Übermitteln derart eingerichtet sind, dass die Ausspielparameter (D₁, D₂, R₁, R₂) vor der zu übertragenden Datei (FI) übermittelt werden.

21. Sendeeinrichtung (TX) nach einem der Ansprüche 15 bis 20, die eine Einrichtung (GEN) zur Erzeugung der Ausspielparameter (D₁, D₂, R₁, R₂) umfasst.

22. Sendeeinrichtung (TX) nach einem der Ansprüche 15 bis 21, die eine Einrichtung zur Speicherung der Ausspielparameter (D₁, D₂, R₁, R₂) umfasst.

23. System zur Dateiübertragung,
umfassend
- eine Empfangseinrichtung (RX) nach einem der Ansprüche 1 bis 14; und
- eine Sendeeinrichtung (TX) nach einem der Ansprüche 15 bis 22.

24. Empfangs-Verfahren zum blockbasierten Empfangen einer Datei (FI), umfassend die Schritte:
- Empfangen der Datei (FI) über einen ersten Kanal (CH1);
- Empfangen von Ausspielparametern (D₁, D₂, R₁, R₂) über einen zweiten Kanal (CH2);
- Bestimmen eines Zeitpunkts für einen Beginn einer Verarbeitung der Datei (FI);
- Ausspielparameter (D₁, D₂, R₁, R₂), die wenigstens einen Satz (Dᵢ, Rᵢ) von Informationen über eine Ausspielrate (R₁, R₂) und eine Verzögerungszeit (D₁, D₂) für die über den ersten Kanal (CH1) zu empfangende Datei (FI) umfassen, empfangen werden; und
- der Zeitpunkt für einen Beginn einer Verarbeitung der Datei (FI) in Abhängigkeit der Ausspielparameter bestimmt wird;
**gekennzeichnet dadurch, dass**
der Zeitpunkt in Abhängigkeit von Empfangsbedingungen des ersten Kanals (CH1) und von Dateieigenschaften der Datei (FI) bestimmen wird.

25. Verfahren nach Anspruch 24,
bei dem die Datei (FI) in einem Zwischenspeicher (ST) zwischengespeichert und als Datenstrom ab dem bestimmten Zeitpunkt an einem Ausgang des Zwischenspeichers (ST) abgegeben wird.

26. Verfahren nach Anspruch 25,
bei dem der Datenstrom mit einer konstanten Bitrate abgegeben wird.

27. Verfahren nach einem der Ansprüche 24 bis 26,
bei dem die Empfangsbedingungen des ersten Kanals (CH1) eine Empfangsrate von Daten des ersten Kanals (CH1) umfassen.

28. Verfahren nach einem der Ansprüche 24 bis 27,
bei dem die Dateieigenschaften der Datei (FI) eine Abspielrate der Datei (FI) umfassen.

29. Sende-Verfahren zum blockbasierten Senden einer Datei (FI), umfassend die Schritte:
- Übermitteln von Ausspielparametern (D₁, D₂, R₁, R₂) über einen zweiten Kanal (CH2);
- Senden der zu übertragenden Datei (FI) über den ersten Kanal (CH1);
- Ausspielparameter (D₁, D₂, R₁, R₂), die wenigstens einen Satz (Dᵢ, Rᵢ) von Informationen über eine Ausspielrate (R₁, R₂) und eine Verzögerungszeit (D₁, D₂) für die über einen ersten Kanal (CH1) zu übertragende Datei (FI) umfassen, übermittelt werden;
**gekennzeichnet dadurch, dass**
der wenigstens eine Satz (Dᵢ, Rᵢ) von Informationen einen ersten Indikator (pᵢ) für Übertragungseigenschaften des ersten Kanals (CH1) umfasst, der eine Verlustrate des ersten Kanals (CH1) angibt.

30. Verfahren nach Anspruch 29,
bei dem die Verzögerungszeit (D₁, D₂) eine Information über einen Zeitpunkt repräsentiert, ab dem eine Verarbeitung der zu übertragenden Datei (FI) in einer Empfangseinrichtung (RX) mit der Ausspielrate (R₁, R₂) verzögerungsfrei erfolgen kann.

31. Verfahren nach Anspruch 29 oder 30,
bei dem der wenigstens eine Satz (Dᵢ, Rᵢ) von Informationen einen zweiten Indikator (Sᵢ) für Übertragungseigenschaften des ersten Kanals (CH1) umfasst.

32. Verfahren nach Anspruch 31,
bei dem der zweite Indikator (Sᵢ) eine Wahrscheinlichkeit für ein Erreichen der Ausspielrate (R₁, R₂) angibt; oder bei dem der zweite Indikator (Sᵢ) eine Wahrscheinlichkeit für eine Pufferung im ersten Kanal (CH1) angibt.

33. Verfahren nach einem der Ansprüche 24 bis 32,
bei dem der wenigstens eine Satz (Dᵢ, Rᵢ) von Informationen einen Parameter über eine Zeitdauer umfasst, für die der Satz (Dᵢ, Rᵢ) von Informationen gültig ist.

34. Verfahren nach einem der Ansprüche 24 bis 33,
bei dem die Ausspielparameter (D₁, D₂, R₁, R₂) vor der zu übertragenden Datei (FI) übermittelt werden.

## Claims

1. Receiving device (RX) for the block-based reception of files via a first channel (CHI), comprising
- means for receiving play parameters (D1, D2, R1, R2) via a second channel (CH2) ; and
- an evaluating device (CTL); wherein
- the play parameters (D1, D2, R1, R2) include at least one set (Di, Ri) of information relating to a play rate (R1, R2) and a delay time (D1, D2) for a file (FI) which is to be received via the first channel (CHI),
- the evaluating device (CTL) is adapted to determine a point in time for commencement of processing of the file (FI), which is to be received, in dependence upon the play parameters (D1, D2, R1, R2);
**characterized in that**
the evaluating device (CTL) is arranged to determine the point in time in dependence upon reception conditions of the first channel (CHI) and upon file characteristics of the file (FI).

2. Receiving device (RX) as claimed in claim 1, comprising an intermediate storage device (ST) which is arranged to buffer the file (FI) to be received and to deliver it as a data stream from the predetermined point in time to an output of the intermediate storage device (ST).

3. Receiving device (RX) as claimed in claim 2, wherein the intermediate storage device (ST) is arranged to deliver the data stream at a constant bit rate.

4. Receiving device (RX) as claimed in one of the claims 1 to 3, wherein the reception conditions of the first channel (CHI) comprise a reception rate of data of the first channel (CHI).

5. Receiving device (RX) as claimed in one of the claims 1 to 5, wherein the file characteristics of the file (FI) comprise a playout rate of the file (FI).

6. Receiving device (RX) as claimed in any one of claims 1 to 5, wherein the at least one set (Di, Ri) of information includes a first indicator (pi) of transmission characteristics of the first channel (CHI).

7. Receiving device (RX) as claimed in claim 6, wherein the first indicator (pi) indicates a loss rate of the first channel (CHI).

8. Receiving device (RX) as claimed in claim 6 or 7, wherein the at least one set (Di, Ri) of information includes a second indicator (Si) of transmission characteristics of the first channel (CH 1).

9. Receiving device (RX) as claimed in claim 8, wherein the second indicator (Si) indicates a probability of achieving the play rate (R1, R2) or wherein the second indicator (Si) indicates a probability of buffering in the first channel (CHI).

10. Receiving device (RX) as claimed in any one of claims 1 to 9, wherein the at least one set (Di, Ri) of information includes a parameter relating to a time duration, for which the set (Di, Ri) of information is valid.

11. Receiving device (RX) as claimed in any one of claims 1 to 10, wherein the means for receiving are arranged in such a manner that the play parameters (D1, D2, R1, R2) are received prior to the file (FI) which is to be received.

12. Receiving device (RX) as claimed in any one of claims 1 to 11, which is arranged to receive the file (FI), which is to be received, in blocks (BL1, BL2, BL3, BLN).

13. Receiving device (RX) as claimed in claim 12, which is arranged to receive the blocks (BL1, BL2, BL3, BLN) with error correction data.

14. Receiving device (RX) as claimed in claim 12 or 13, which is arranged to receive the blocks (BL 1, BL2, BL3, BLN) sequentially or wherein the first channel comprises several partial channels and the receiving device (RX) is arranged to receive the blocks (BL1, BL2, BL3, BLN) in parallel via the partial channels or which is arranged to receive the blocks (BL 1, BL2, BL3, BLN) according to a spreading process or an interleaving process or which is arranged to receive the blocks (BL1, BL2, BL3, BLN) repeatedly or which is arranged to receive the blocks (BL1, BL2, BL3, BLN) using a fountain code or which is arranged to receive the blocks (BL 1, BL2, BL3, BLN) according to the FLUTE protocol.

15. Transmitting device (TX) for the block-based transmission of files via a first channel (CH I),
comprising
- means for transmitting play parameters (D1, D2, R1, R2) via a second channel (CH2); wherein the play parameters (D1, D2, R1, R2) include at least one set (Di, Ri) of information relating to a play rate (R1, R2) and a delay time (D1, D2) for a file (FI) which is to be transmitted via the first channel (CHI);
**characterized in that**
the at least one set (Di, Ri) of information includes a first indicator (pi) of transmission characteristics of the first channel (CHI) which indicates a loss rate of the first channel (CHI).

16. Transmitting device (TX) as claimed in claim 15, wherein the delay time (D1, D2) represents information relating to a point in time, from which processing of the file (FI), which is to be transmitted, can be performed without delay in a receiving device (RX) at the play rate (R1, R2).

17. Transmitting device (TX) as claimed in claim 15 or 16, wherein the at least one set (Di, Ri) of information includes a second indicator (Si) of transmission characteristics of the first channel (CHI).

18. Transmitting device (TX) as claimed in claim 17, wherein the second indicator (Si) indicates a probability of achieving the play rate (R1, R2) or wherein the second indicator (Si) indicates a probability of buffering in the first channel (CHI).

19. Transmitting device (TX) as claimed in any one of claims 15 to 18, wherein the at least one set (Di, Ri) of information includes a parameter relating to a time duration, for which the set (Di, Ri) of information is valid.

20. Transmitting device (TX) as claimed in any one of claims 15 to 20, wherein the means for transmitting are arranged in such a manner that the play parameters (D1, DZ, R1, R2) are transmitted prior to the file (FI) which is to be transmitted.

21. Transmitting device (TX) as claimed in any one of claims 16 to 22, which comprises a device (GEN) for generating the play parameters (D1, D2, R1, R2).

22. Transmitting device (TX) as claimed in any one of claims 16 to 23, which comprises a device for storing the play parameters (D1, D2, R1, R2).

23. System for file transmission, comprising
- a receiving device (RX) according to one of claims 1 to 14 ; and
- a transmitting device (TX) according to one of claims 15 to 22.

24. Reception method for the block-based reception of a file (FI), comprising the steps of:
- receiving the file (FI) via a first channel (CHI);
- receiving play parameters (D1, D2, R1, R2) via a second channel (CH2);
- determining a point in time for commencement of processing of the file (FI); wherein
- the play parameters (D1, D2, R1, R2) comprise at least one set (Di, Ri) of information relating to a play rate (R1, R2) and a delay time (D1, D2) for the file (FI) which is to be received via the first channel (CHI);
- the point in time for commencement of processing of the file (FI) is determined in dependence upon the play parameters;
**characterized in that**
the point in time is determined in dependence upon reception conditions of the first channel (CHI) and upon file characteristics of the file (FI).

25. Method as claimed in claim 24, wherein the file (FI) is buffered in an intermediate storage device (ST) and is delivered as a data stream from the specific point in time to an output of the intermediate storage device (ST).

26. Method as claimed in claim 25, wherein the data stream is delivered at a constant bit rate.

27. Method as claimed in one of the claims 24 to 26, wherein the reception conditions of the first channel (CHI) comprise a reception rate of data of the first channel (CHI).

28. Method as claimed in one of the claims 24 to 27, wherein the file characteristics of the file (FI) comprise a playout rate of the file (FI).

29. Transmission method for the block-based transmission of a file (FI), comprising the steps of:
- transmitting play parameters (D1, D2, R1, R2) via a second channel (CH2) ;
- transmitting the file (FI), which is to be transmitted, via the first channel (CHI); wherein
- the play parameters (D1, D2, R1, R2) comprise at least one set (Di, Ri) of information relating to a play rate (R1, R2) and a delay time (D1, D2) for the file (FI) which is to be transmitted via a first channel (CHI);
**characterized in that**
the at least one set (Di, Ri) of information includes a first indicator (pi) of transmission characteristics of the first channel (CHI) which indicates a loss rate of the first channel (CHI).

30. Method as claimed in claim 29, wherein the delay time (D1, D2) represents information relating to a point in time, from which processing of the file (FI), which is to be transmitted, can be performed without delay in a receiving device (RX) at the play rate (R1, R2).

31. Method as claim 29 or 30, wherein the at least one set (Di, Ri) of information includes a second indicator (Si) of transmission characteristics of the first channel (CHI).

32. Method as claimed in claim 31, wherein the second indicator (Si) indicates a probability of achieving the play rate (R1, R2) or wherein the second indicator (Si) indicates a probability of buffering in the first channel (CHI).

33. Method as claimed in any one of claims 24 to 32, wherein the at least one set (Di, Ri) of information includes a parameter relating to a time duration, for which the set (Di, Ri) of information is valid.

34. Method as claimed in any one of claims 24 to 33, wherein the play parameters (D1, D2, R1, R2) are transmitted prior to the file (FI) which is to be transmitted.

## Revendications

1. Dispositif de réception (RX) pour la réception par blocs de fichiers par un premier canal (CH1),
comprenant
- des moyens de réception de paramètres de lecture (D₁, D₂, R₁, R₂) par un deuxième canal (CH2) ; et
- un dispositif d'évaluation (CTL) ;
dans lequel
- les paramètres de lecture (D₁, D₂, R₁, R₂) comprennent au moins un ensemble (Dᵢ, Rᵢ) d'informations sur un débit de lecture (R₁, R₂) et un temps de retard (D₁, D₂) pour un fichier (FI) à recevoir par le premier canal (CH1) ; et
- le dispositif d'évaluation (CTL) est conçu pour déterminer un instant de début d'un traitement du fichier (FI) à recevoir en fonction des paramètres de lecture (D₁, D₂, R₁, R₂) ;
**caractérisé en ce que**
le dispositif d'évaluation (CTL) est conçu pour déterminer ledit instant en fonction de conditions de réception du premier canal (CH1) et de propriétés de fichier du fichier (FI).

2. Dispositif de réception (RX) selon la revendication 1,
comprenant une mémoire temporaire (ST) qui est conçue pour stocker temporairement le fichier (FI) à recevoir et pour délivrer celui-ci sous forme de flux de données à une sortie de la mémoire temporaire (ST) à partir de l'instant déterminé.

3. Dispositif de réception (RX) selon la revendication 2,
dans lequel la mémoire temporaire (ST) est conçue pour délivrer le flux de données à un débit binaire constant.

4. Dispositif de réception (RX) selon l'une des revendications 1 à 3,
dans lequel les conditions de réception du premier canal (CH1) comprennent un débit de réception de données du premier canal (CH1).

5. Dispositif de réception (RX) selon la revendication 4,
dans lequel les propriétés de fichier du fichier (FI) comprennent un débit de lecture du fichier (FI).

6. Dispositif de réception (RX) selon l'une des revendications 1 à 5,
dans lequel ledit au moins un ensemble (Dᵢ, Rᵢ) d'informations comprend un premier indicateur (pi) de propriétés de transmission du premier canal (CH1).

7. Dispositif de réception (RX) selon la revendication 6,
dans lequel le premier indicateur (pᵢ) indique un débit de perte du premier canal (CH1).

8. Dispositif de réception (RX) selon la revendication 6 ou 7,
dans lequel ledit au moins un ensemble (Dᵢ, Rᵢ) d'informations comprend un deuxième indicateur (Sᵢ) de propriétés de transmission du premier canal (CH1).

9. Dispositif de réception (RX) selon la revendication 8,
dans lequel le deuxième indicateur (Sᵢ) indique une probabilité d'atteindre le débit de lecture (R₁, R₂) ou dans lequel le deuxième indicateur (Sᵢ) indique une probabilité de mise en mémoire tampon dans le premier canal (CH1).

10. Dispositif de réception (RX) selon l'une des revendications 1 à 9,
dans lequel ledit au moins un ensemble (Dᵢ, Rᵢ) d'informations comprend un paramètre sur une durée pendant laquelle l'ensemble (Dᵢ, Rᵢ) d'informations est valide.

11. Dispositif de réception (RX) selon l'une des revendications 1 à 10,
dans lequel les moyens de réception sont conçus de façon que les paramètres de lecture (D₁, D₂, R₁, R₂) soient reçus avant le fichier (FI) à recevoir.

12. Dispositif de réception (RX) selon l'une des revendications 1 à 11,
lequel est conçu pour recevoir le fichier (FI) à recevoir par blocs (BLI, BL2, BL3, BLN).

13. Dispositif de réception (RX) selon la revendication 12,
lequel est conçu pour recevoir les blocs (BLI, BL2, BL3, BLN) avec des données de correction d'erreurs.

14. Dispositif de réception (RX) selon la revendication 12 ou 13,
lequel est conçu pour recevoir les blocs (BLI, BL2, BL3, BLN) séquentiellement ; ou dans lequel le premier canal comprend plusieurs sous-canaux et le dispositif de réception (RX) est conçu pour recevoir les blocs (BLI, BL2, BL3, BLN) en parallèle par les sous-canaux ; ou lequel est conçu pour recevoir les blocs (BLI, BL2, BL3, BLN) après un procédé d'étalement ou un procédé de brouillage ; ou lequel est conçu pour recevoir les blocs (BLI, BL2, BL3, BLN) de façon répétée ; ou lequel est conçu pour recevoir les blocs (BLI, BL2, BL3, BLN) en appliquant un code fontaine ; ou lequel est conçu pour recevoir les blocs (BLI, BL2, BL3, BLN) selon le protocole FLUTE.

15. Dispositif d'émission (TX) pour la transmission par blocs de fichiers par un premier canal (CH1),
comprenant
- des moyens de transmission de paramètres de lecture (D₁, D₂, R₁, R₂) par un deuxième canal (CH2) ;
dans lequel les paramètres de lecture (D₁, D₂, R₁, R₂) comprennent au moins un ensemble (Dᵢ, Rᵢ) d'informations sur un débit de lecture (R₁, R₂) et un temps de retard (D₁, D₂) pour un fichier (FI) à transmettre par le premier canal (CH1) ;
**caractérisé en ce que**
ledit au moins un ensemble (Dᵢ, Rᵢ) d'informations comprend un premier indicateur (pᵢ) de propriétés de transmission du premier canal (CH1), qui indique un débit de perte du premier canal (CH1).

16. Dispositif d'émission (TX) selon la revendication 15,
dans lequel le temps de retard (D₁, D₂) représente une information sur un instant à partir duquel un traitement du fichier (FI) à transmettre dans un dispositif de réception (RX) au débit de lecture (R₁, R₂) peut avoir lieu sans retard.

17. Dispositif d'émission (TX) selon la revendication 15 ou 16,
dans lequel ledit au moins un ensemble (Dᵢ, Rᵢ) d'informations comprend un deuxième indicateur (Sᵢ) de propriétés de transmission du premier canal (CH1).

18. Dispositif d'émission (TX) selon la revendication 17,
dans lequel le deuxième indicateur (Sᵢ) indique une probabilité d'atteindre le débit de lecture (R₁, R₂) ; ou dans lequel le deuxième indicateur (Sᵢ) indique une probabilité de mise en mémoire tampon dans le premier canal (CH1).

19. Dispositif d'émission (TX) selon l'une des revendications 15 à 18,
dans lequel ledit au moins un ensemble (Dᵢ, Rᵢ) d'informations comprend un paramètre sur une durée pendant laquelle l'ensemble (Dᵢ, Rᵢ) d'informations est valide.

20. Dispositif d'émission (TX) selon l'une des revendications 15 à 19,
dans lequel les moyens de transmission sont conçus de façon que les paramètres de lecture (D₁, D₂, R₁, R₂) soient transmis avant le fichier (FI) à transmettre.

21. Dispositif d'émission (TX) selon l'une des revendications 15 à 20, lequel comprend un dispositif (GEN) pour générer les paramètres de lecture (D₁, D₂, R₁, R₂).

22. Dispositif d'émission (TX) selon l'une des revendications 15 à 21, lequel comprend un dispositif pour mémoriser les paramètres de lecture (D₁, D₂, R₁, R₂).

23. Système de transmission de données,
comprenant
- un dispositif de réception (RX) selon l'une des revendications 1 à 14 ; et
- un dispositif d'émission (TX) selon l'une des revendications 15 à 22.

24. Procédé de réception pour la réception par blocs d'un fichier (FI), comprenant les étapes de :
- réception du fichier (FI) par un premier canal (CH1) ;
- réception de paramètres de lecture (D₁, D₂, R₁, R₂) par un deuxième canal (CH2) ;
- détermination d'un instant d'un début d'un traitement du fichier (FI) ; dans lequel
- les paramètres de lecture (D₁, D₂, R₁, R₂) comprennent au moins un ensemble (Dᵢ, Rᵢ) d'informations sur un débit de lecture (R₁, R₂) et un temps de retard (D₁, D₂) pour un fichier (FI) à recevoir par le premier canal (CH1) ; et
- l'instant d'un début d'un traitement du fichier (FI) est déterminé en fonction des paramètres de lecture ;
**caractérisé en ce que**
ledit instant est déterminé en fonction de conditions de réception du premier canal (CH1) et de propriétés de fichier du fichier (FI).

25. Procédé selon la revendication 24,
dans lequel le fichier (FI) est temporairement stocké dans une mémoire temporaire (ST) et délivré sous la forme d'un flux de données à une sortie de la mémoire temporaire (ST) à partir de l'instant déterminé.

26. Procédé selon la revendication 25,
dans lequel le flux de données est délivré à un débit binaire constant.

27. Procédé selon l'une des revendications 24 à 26,
dans lequel les conditions de réception du premier canal (CH1) comprennent un débit de réception de données du premier canal (CH1).

28. Procédé selon l'une des revendications 24 à 27,
dans lequel les propriétés de fichier du fichier (FI) comprennent un débit de lecture du fichier (FI).

29. Procédé d'émission pour l'émission par blocs d'un fichier (FI), comprenant les étapes de :
- transmission de paramètres de lecture (D₁, D₂, R₁, R₂) par un deuxième canal (CH2) ;
- émission du fichier (FI) à transmettre par le premier canal (CH1) ;
dans lequel
- les paramètres de lecture (D₁, D₂, R₁, R₂) comprennent au moins un ensemble (Dᵢ, Rᵢ) d'informations sur un débit de lecture (Rᵢ, R₂) et un temps de retard (D₁, D₂) pour le fichier (FI) à transmettre par un premier canal (CH1) ;
**caractérisé en ce que**
ledit au moins un ensemble (Dᵢ, Rᵢ) d'informations comprend un premier indicateur (pᵢ) de propriétés de transmission du premier canal (CH1), qui indique un débit de perte du premier canal (CH1).

30. Procédé selon la revendication 29,
dans lequel le temps de retard (D₁, D₂) représente une information sur un instant à partir duquel un traitement du fichier (FI) à transmettre dans un dispositif de réception (RX) au débit de lecture (R₁, R₂) peut avoir lieu sans retard.

31. Procédé selon la revendication 29 ou 30,
dans lequel ledit au moins un ensemble (Dᵢ, Rᵢ) d'informations comprend un deuxième indicateur (Sᵢ) de propriétés de transmission du premier canal (CH1).

32. Procédé selon la revendication 31,
dans lequel le deuxième indicateur (Sᵢ) indique une probabilité d'atteindre le débit de lecture (R₁, R₂) ; ou dans lequel le deuxième indicateur (Sᵢ) indique une probabilité de mise en mémoire tampon dans le premier canal (CH1).

33. Procédé selon l'une des revendications 24 à 32,
dans lequel ledit au moins un ensemble (Dᵢ, Rᵢ) d'informations comprend un paramètre sur une durée pendant laquelle l'ensemble (Dᵢ, Rᵢ) d'informations est valide.

34. Procédé selon l'une des revendications 24 à 33,
dans lequel les paramètres de lecture (D₁, D₂, R₁, R₂) sont transmis avant le fichier (FI) à transmettre.
